# FASCICULE DE BREVET EUROPEEN

(11) **EP 2 683 142 B1**
(45) Date de publication et mention de la délivrance du brevet: **05.11.2014**
(21) Numéro de dépôt: 13173503.7
(22) Date de dépôt: 25.06.2013
(51) Int. Cl.: H04M 1/60, B60R 7/05, B60R 11/02

(54) **Dispositif téléphonique "mains libres" autonome, en forme d'objet monobloc amovible pincé sur un pare-soleil de véhicule automobile**
Autonome Freisprechtelefonvorrichtung in Form eines entfernbaren Monoblockobjekts, das an die Sonnenblende eines Kraftfahrzeugs geklemmt werden kann
Self-contained hands-free telephone device, in the form of removable single-unit object clamped on a sun visor of a motor vehicle

(30) Priorité: 04.07.2012 FR 1256426
(43) Date de publication de la demande: 08.01.2014
(73) Titulaire: Parrot, 75010 Paris (FR)
(72) Inventeur: Fargeau, Karim, 75012 Paris (FR)
(74) Mandataire: Dupuis-Latour, Dominique

(56) Documents cités:
- DE-U1-202006 013 765
- GN Netcom: "Jabra Drive User Manual", , 31 décembre 2011 (2011-12-31), XP002693018, Extrait de l'Internet: URL:http://www.jabra.com/~/media/Product%2 0Documentation/Jabra%20DRIVE/User%20Manual s/User_Manual_Jabra_Drive.pdf [extrait le 2013-02-28]

## Description

L'invention concerne un accessoire autonome de type "kit mains libres" destiné à être interfacé à un téléphone portable, notamment à bord d'un véhicule automobile.

Un tel accessoire se présente sous la forme d'un boitier amovible autonome, comportant tous les éléments et toutes les commandes permettant d'assurer la mise en oeuvre des fonctions "mains libres", y compris microphone, haut-parleur et batterie d'alimentation, ainsi que des moyens d'interfaçage avec un téléphone portable distant, par une liaison sans fil de type *Bluetooth* (marque déposée du Bluetooth SIG, Inc.). Les spécifications *Bluetooth* prévoient en effet la possibilité de piloter à distance par une liaison sans fil bidirectionnelle toutes les fonctions d'un téléphone portable telles que décrochage, raccrochage, numérotation, navigation dans les menus et dans les répertoires, etc. en prenant intégralement et à distance le contrôle du téléphone portable en se substituant entièrement au clavier de celui-ci.

Un tel accessoire est par exemple décrit dans le WO 2005/074239 A1 (Parrot).

Par rapport aux équipements intégrés à demeure au véhicule, le principal avantage de ces accessoires est qu'ils ne requièrent aucun branchement et peuvent être installés (et retirés) immédiatement par l'utilisateur lui-même. L'accessoire peut notamment être installé dans le véhicule au moyen d'un clip permettant de le fixer par exemple à un pare-soleil. Un tel accessoire est par exemple commercialisé par Parrot SA, Paris, France, sous la référence *Minikit* ou *Minikit slim* : le dispositif, entièrement autonome, se présente sous la forme d'un simple boitier incluant micro, haut-parleur, touches de commande, un bouton rotatif multifonction, etc. et il incorpore l'ensemble des circuits électroniques nécessaires, ainsi qu'une batterie d'alimentation.

Le document de GN Netcom, Jabra Drive User Manual, XP002693018 daté du 31.12.2011 décrit un autre de ces accessoires, avec un boitier monobloc recourbé en forme de U en matériau élastique permettant de le pincer sur le pare-soleil du véhicule à la manière d'un clip, tous les circuits et composants électroniques étant regroupés dans le boitier sur l'une des branches du U.

L'inconvénient de ces accessoires autonomes, par rapport aux systèmes "mains libres" installés à demeure dans le véhicule, réside dans la proximité entre le micro et le haut-parleur, imposée par la nécessité de disposer d'un objet monobloc de petite taille. À l'opposé, dans une installation à demeure, il est possible de prévoir un ou plusieurs microphones dont la position sur le tableau de bord est optimisée, ces microphones étant en tout état de cause placés à distance des haut-parleurs, qui sont en général ceux de l'autoradio et sont placés dans les portières, sous une console, etc.

La proximité entre micro et haut-parleur, combinée à la distance relativement importante entre le micro et le locuteur (distance du pare-soleil à la bouche du conducteur) conduit à un niveau de bruit et d'écho très élevé. En particulier, dans les situations de double parole où le conducteur et le locuteur distant avec qui il est en conversation parlent tous les deux en même temps, le son reproduit par le haut-parleur du dispositif va être capté par le micro, voisin, de ce même dispositif avec création d'un écho et d'interférences acoustiques importantes.

Cet inconvénient est d'autant plus accru que, comme il n'est pas possible de savoir *a priori* où et comment le dispositif sera placé dans le véhicule, il est nécessaire d'utiliser comme micro intégré un transducteur présentant un diagramme de sensibilité très large, de manière à pouvoir être certain de capter la voix de l'utilisateur. Ce micro à diagramme omnidirectionnel aura tendance à capter un niveau plus important de bruit ambiant, de résonances dans l'habitacle, d'écho, etc., avec une dégradation importante du rapport signal/bruit.

De ce fait, il est nécessaire de prévoir des algorithmes relativement complexes de filtrage et de suppression d'écho, nécessitant un microcontrôleur puissant venant grever le prix de revient final du produit.

Une solution proposée par le FR 2 961 052 A1 (Parrot) consiste à prévoir un micro amovible, qui peut être détaché et éloigné du dispositif pour être installé en un endroit mieux approprié sur le plan acoustique. Cette solution impose toutefois de prévoir une liaison par fil entre le micro et l'appareil, ainsi qu'un moyen de fixation du micro déporté au tableau de bord. Mis à part les aspects esthétiques, ces contraintes retirent à l'appareil une partie de son intérêt, qui résidait dans sa possibilité d'installation et de retrait immédiat.

Ainsi, un but de l'invention est de proposer un appareil autonome de type "kit mains libres" qui, dans de telles circonstances, améliore notablement la qualité acoustique de la communication, tout en préservant le caractère monobloc et autonome de l'objet.

A cet effet, l'invention propose un tel dispositif se présentant, de manière en elle-même connue par exemple d'après le document *Jabra Drive User Manual* précité, sous forme d'un boitier logeant un capteur microphonique de prise de son, un transducteur de reproduction sonore, une pluralité de boutons de commande, une carte imprimée portant des circuits électroniques, une batterie d'alimentation, ainsi qu'éventuellement des témoins de fonctionnement, un connecteur externe et une antenne de communication en champ proche. Le boitier a la forme d'une bande allongée recourbée sur elle-même de manière à former une pince présentant latéralement un profil en U, avec une première branche et une seconde branche s'étendant respectivement de part et d'autre d'une région centrale de plus forte courbure du U.

La solution de l'invention au problème précité consiste à ménager dans la région centrale de la bande recourbée une discontinuité transversale séparant mécaniquement les deux branches, et de faire en sorte que le transducteur soit porté par la première branche et le capteur soit porté par la seconde branche. De cette manière, le transducteur et le capteur sont découplés acoustiquement entre eux par la discontinuité transversale.

Selon diverses caractéristiques subsidiaires avantageuses :
- les deux branches sont des branches rigides reliées et articulées entre elles dans la région centrale par une charnière d'axe transversal, cette charnière étant associée à des moyens de rappel élastique des deux branches dans le sens de leur rapprochement mutuel ;
- la première branche comprend un logement définissant un volume clos recevant le transducteur, volume qui peut être fermé par un couvercle avec interposition d'un joint circonférentiel : il est alors possible de prévoir comme transducteur un exciteur de haut-parleur à mode distribué, la première branche étant plane et portant un panneau vibratile entrainé par l'exciteur ;
- le capteur est placé dans une région proximale de la face externe de la seconde branche, au voisinage de la région centrale de plus forte courbure du U ;
- le capteur comprend une capsule microphonique elle-même logée dans un support intermédiaire rapporté sur une paroi de la seconde branche ;
- l'une au moins des branches porte sur sa face interne un patin de retenue antidérapant réalisé en un matériau résilient acoustiquement absorbant ;
- la longueur de la seconde branche est plus faible que celle de la première branche ;
- les boutons de commande, la carte imprimée et les témoins de fonctionnement sont portés par la première branche, tandis que l'antenne de communication en champ proche est portée par la seconde branche.

On va maintenant décrire un exemple de mise en oeuvre de l'invention, en référence aux dessins annexés où les mêmes références numériques désignent d'une figure à l'autre des éléments identiques ou fonctionnellement semblables.
La Figure 1 est une vue générale en perspective du dispositif selon l'invention.
La Figure 2 est une vue en élévation de ce même dispositif.
La Figure 3 est une vue en transparence, partiellement éclatée, montrant notamment les éléments contenus à l'intérieur du boitier du dispositif.
La Figure 4 est une vue en élévation, en coupe, du dispositif.
La Figure 5 est une vue en perspective du dispositif, montrant en transparence le système d'articulations et de ressorts reliant les deux branches du dispositif.
La Figure 6 est une vue perspective du dispositif, où le panneau supérieur a été retiré pour montrer la manière dont est intégré le transducteur de reproduction sonore.

Sur les figures, la référence 10 désigne de façon générale le dispositif de l'invention, qui se présente sous la forme d'un accessoire monobloc autonome articulé (on verra plus bas de quelle manière) intégrant tous les composants nécessaires à la mise en oeuvre de la fonction de téléphonie "mains libres".

Plus précisément, le boitier 12 du dispositif comporte un capteur microphonique de prise de son 14 (ci-après simplement "micro") destiné à recueillir la voix du conducteur, et un transducteur de reproduction sonore 16 (ci-après simplement "transducteur") destiné à reproduire la voix du locuteur distant avec lequel le conducteur est en conversation.

Le dispositif comporte en outre un certain nombre de commandes à disposition de l'utilisateur, avec notamment :
- deux touches 18 et 20 de commande du téléphone (notamment les fonctions prise de ligne/composition et raccrochage/annulation) ;
- un bouton rotatif multifonction 36, qui assure différentes commandes selon les états du dispositif, par exemple : réglage du volume du transducteur 16, navigation dans un menu, etc. Ce bouton 22 peut être commandé non seulement en le faisant tourner, mais également comme un bouton-poussoir pour "cliquer" et commander par exemple l'acquittement d'une fonction ou un choix dans un menu, l'activation d'un mode de reconnaissance vocale, etc. ;
- un interrupteur marche/arrêt/test de batterie 24 ;
- des voyants rouge et vert 26, 28 activés en fonction de l'état du dispositif ;
- un connecteur (non visible sur les figures) pour la recharge de la batterie interne du dispositif.

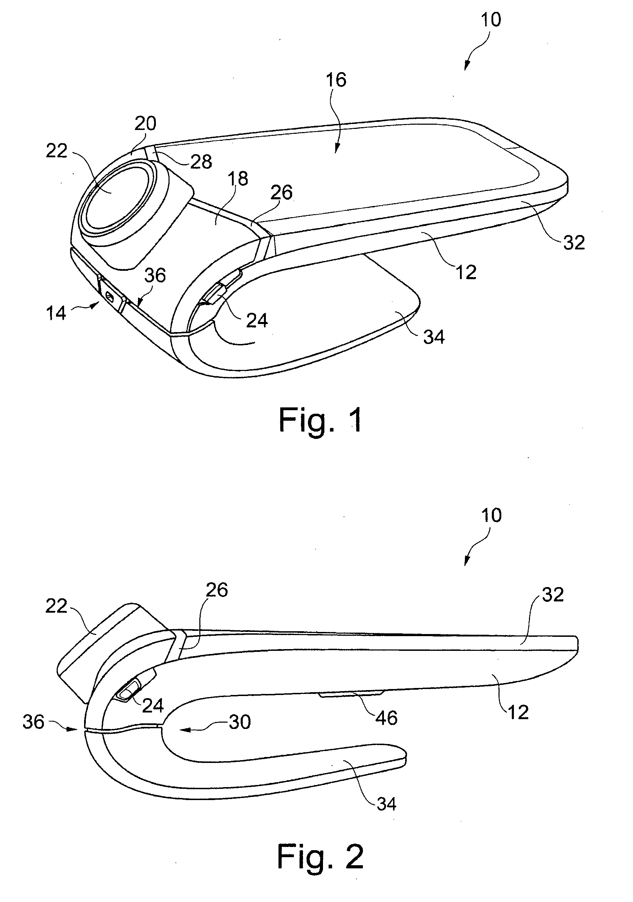

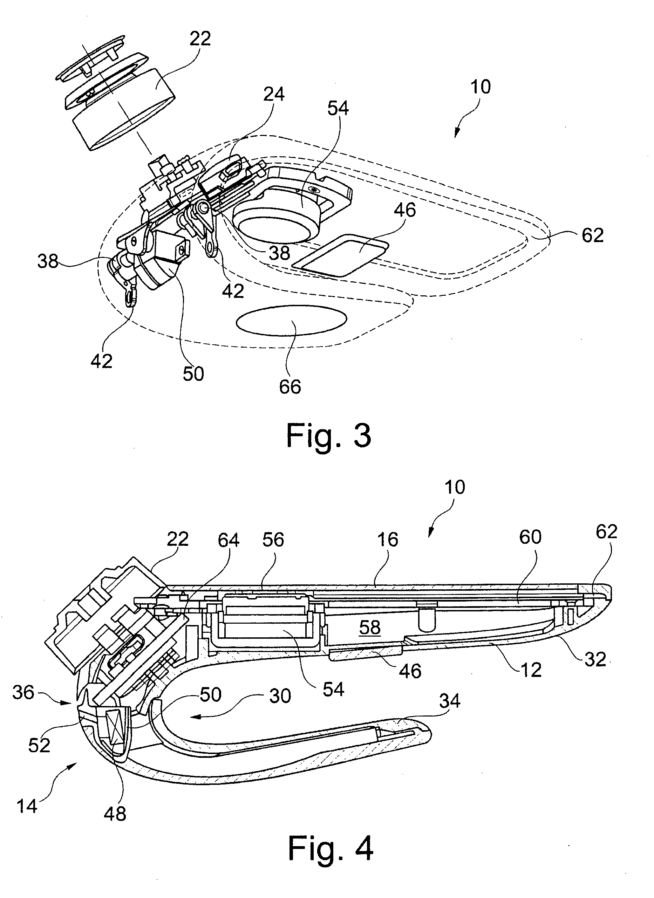

De façon caractéristique, le boitier 12 est réalisé sous forme d'une bande allongée recourbée sur elle-même de manière à présenter latéralement (voir notamment les Figures 2 et 4) un profil en U de part et d'autre d'une région centrale 30 de plus forte courbure, définissant ainsi deux branches 32, 34 s'étendant de part et d'autre de la région centrale 30.

La première branche 32, qui est destinée à être tournée vers le conducteur, porte le transducteur 16 ainsi que l'ensemble des commandes 20 à 28 décrites plus haut, regroupées sur un bord de la branche supérieure dans la région proximale de celle-ci (c'est-à-dire à proximité de la région centrale 30). Ceci permet de ménager sur la face extérieure, apparente, de la première branche 32 une surface plane d'étendue relativement importante (la majeure partie de la longueur de la première branche 32 et pratiquement toute sa largeur). Ceci permet en particulier l'utilisation comme transducteur d'un composant de type haut-parleur à mode distribué, mettant en oeuvre un panneau vibratile constitué par l'essentiel de la surface extérieure, plane, de la première branche.

La deuxième branche 34, quant à elle, porte le micro 14, disposé à proximité de la région centrale 30 de manière à rester apparent même lorsque le dispositif est installé sur un pare-soleil (la majeure partie de la deuxième branche 34 n'étant, alors, pas apparente puisque cachée derrière le pare-soleil à l'opposé de la première branche 32).

De façon caractéristique de l'invention, le corps du boitier 12 présente en 36 une discontinuité transversale 36, cette discontinuité étant une discontinuité périphérique formée dans la paroi du boitier 12 sur toute la largeur et sur les côtés de celui-ci. Le dispositif se présente donc sous forme de deux pièces reliées mécaniquement mais séparées, l'une portant la première branche 32 et l'autre la deuxième branche 34.

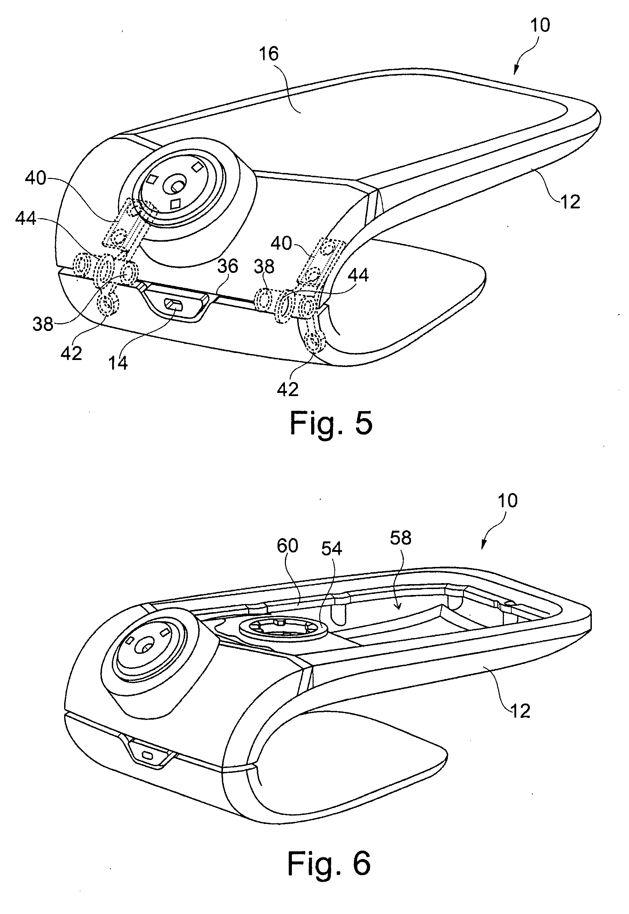

La Figure 5 illustre plus précisément la manière dont ces deux pièces sont reliées et articulées ensemble. Il est prévu à cet effet à l'intérieur du boitier deux charnières 38 d'axe transversal, chacune fixée en 40 et 42 respectivement à la partie du boitier portant la première branche et à celle portant la seconde branche. Ces charnières 38 (disposées dans l'exemple illustré aux deux extrémités opposées de la discontinuité transversale 36) sont associées à des moyens de rappel élastique, par exemple des ressorts 44 sollicitant les deux parties du boitier dans le sens d'un rapprochement mutuel des deux branches.

Le dispositif peut ainsi se comporter à la manière d'une pince articulée permettant son maintien sur le pare-soleil, notamment si l'on donne aux deux branches une forme appropriée : en particulier, à l'état pincé (correspondant à l'illustration de la Figure 2), l'intervalle séparant les deux branches 32 et 34 est plus réduit dans la région distale que dans la région proximale, de manière à accentuer l'effet de pincement. En d'autres termes, dans la configuration de fermeture maximale les deux branches ne sont pas parallèles, mais leurs extrémités sont légèrement rapprochées.

Le maintien sur le pare-soleil peut en outre être renforcé en prévoyant sur la face intérieure de la première branche 32 un patin de retenue antidérapant 46, situé sensiblement au droit de l'extrémité distale de la deuxième branche 34 (qui est prévue un peu plus courte que la première branche 32).

Le débattement de l'articulation et la géométrie respective des deux branches sont choisis de manière que le dispositif puisse s'adapter sur les pare-soleils d'à peu près tous les véhicules automobiles, et les faces intérieures des deux branches 32 et 34 sont approximativement planes, pour s'adapter au mieux aux faces planes d'un pare-soleil.

Dans l'exemple présenté, les branches 32, 34 sont des branches rigides, articulées, mais on pourrait également envisager de donner, notamment à la deuxième branche 34, une élasticité propre participant à la fonction de pincement sur le pare-soleil.

La présence de la discontinuité transversale 36 crée, de façon caractéristique de l'invention, un découplage acoustique entre le micro 14 et le transducteur 16, ces deux organes étant acoustiquement séparés par la discontinuité 36 qui empêche, ou à tout le moins réduit dans des proportions très importantes, la transmission vers le micro 14 des vibrations produites dans le boitier 12 par le transducteur 16.

La Figure 4 montre plus précisément la manière dont le micro 14 est constitué et monté dans la partie inférieure du boitier (celle portant la deuxième branche 34).

Le micro 14 est formé d'une capsule microphonique 48 logée dans un support intermédiaire 50 communiquant avec l'extérieur par un canal 52, ce support étant rapporté sur une paroi du boitier, par exemple par vissage. Cette configuration avec un boitier intermédiaire permet d'obtenir un niveau de découplage supplémentaire entre le capteur proprement dit (la capsule 48) et le corps du boitier, en complément du découplage permis par la discontinuité transversale 36. Le micro est de préférence de type omnidirectionnel, pour pouvoir capter convenablement la parole du conducteur depuis la région où se situe ce micro, au voisinage de la région centrale 30 du U, lorsque le dispositif 10 est pincé sur le pare-soleil. Les Figures 3, 4 et 6 montrent plus précisément la configuration du transducteur de reproduction sonore 16.

Comme on l'a indiqué plus haut, ce transducteur est avantageusement du type haut-parleur à mode distribué, avec un exciteur 54 monté dans la partie supérieure du boitier 12 (celle portant la première branche 32), couplé en 56 au panneau vibratile 16 tourné vers le conducteur produisant les vibrations sonores.

Pour optimiser ce montage sur le plan acoustique, l'exciteur 54 est disposé à l'intérieur d'un logement 58 de la partie supérieure du boitier 12, définissant un volume clos, fermé par montage d'un capot de fermeture portant le panneau vibratile 16 contre un rebord périphérique 60 avec interposition d'un joint périphérique torique 62, de manière à empêcher toute fuite d'air depuis la cavité du logement 58, en procurant ainsi un niveau supplémentaire de découplage entre le transducteur et le micro.

En ce qui concerne les aspects acoustiques, on notera par ailleurs que le patin de retenue antidérapant 46 est avantageusement réalisé en un matériau résilient acoustiquement absorbant, de manière à empêcher le boitier 12 du dispositif de vibrer s'il est monté sur un pare-soleil rigide, participant ainsi à l'amélioration de la solution acoustique d'ensemble.

En ce qui concerne les éléments électroniques, la partie supérieure du boitier 12 porte la carte de circuit imprimé 64 portant tous les circuits électroniques et les diverses commandes et témoins de fonctionnement, ainsi que la batterie (non représentée), tous les éléments électriques et électroniques à l'exception du micro pouvant être ainsi regroupés dans cette même partie supérieure du boitier.

Si le dispositif est équipé d'un système de communication en champ proche par voie inductive de type NFC, l'antenne NFC 66 peut être disposée dans la branche inférieure du boitier. En effet, s'agissant d'une communication à distance, à quelques centimètres, il n'est pas gênant de la placer à cet endroit ; d'autre part, du point de vue de l'efficacité, celle-ci sera meilleure si cette antenne est éloignée des éléments magnétiques de l'exciteur 54 du transducteur.

En ce qui concerne les performances acoustiques, par rapport au précédent modèle *Minikit slim* évoqué dans la partie introductive de la présente description, le dispositif selon l'invention permet sans difficulté d'augmenter d'environ 50 % la puissance acoustique délivrée par le transducteur sans pour autant perturber le signal capté par le micro, et ceci avec un dispositif dont la dimension en longueur est réduite d'environ 50 %, donc avec une configuration beaucoup plus compacte. En outre, ces performances sont obtenues avec une amélioration qualitative substantielle du signal acoustique capté par le micro, en dépit de l'augmentation de la puissance acoustique du transducteur.

## Revendications

1. Un dispositif téléphonique d'interfaçage "mains libres" avec un téléphone portable,
ce dispositif (10) se présentant sous forme d'un accessoire monobloc apte à être assujetti de manière amovible par pincement sur un équipement plat d'un véhicule automobile, notamment sur un pare-soleil,
ce dispositif comportant un boitier (12) logeant : un capteur microphonique de prise de son (14) ; un transducteur de reproduction sonore (54, 16) ; une pluralité de boutons de commande (18, 20, 22, 24) ; une carte imprimée (64) portant des circuits électroniques ; et une batterie d'alimentation ; ainsi qu'éventuellement : des témoins de fonctionnement (26, 28), un connecteur externe et une antenne de communication en champ proche (66),
dans lequel le boitier est en forme d'une bande allongée, recourbée sur elle-même de manière à former une pince présentant latéralement un profil en U, avec une première branche (32) et une seconde branche (34) s'étendant respectivement de part et d'autre d'une région centrale de plus forte courbure du U (30),
dispositif **caractérisé en ce que** :
- la bande recourbée présente dans la région centrale une discontinuité transversale (36) séparant mécaniquement les deux branches ; et
- le transducteur est porté par la première branche et le capteur est porté par la seconde branche, de manière que le transducteur et le capteur soient découplés acoustiquement entre eux par ladite discontinuité transversale.

2. Le dispositif de la revendication 1, dans lequel les deux branches sont des branches rigides reliées et articulées entre elles dans la région centrale par une charnière (38) d'axe transversal, cette charnière étant associée à des moyens (44) de rappel élastique des deux branches dans le sens de leur rapprochement mutuel.

3. Le dispositif de la revendication 1, dans lequel la première branche comprend un logement (58) définissant un volume clos recevant le transducteur.

4. Le dispositif de la revendication 3, dans lequel le volume clos est fermé par un couvercle avec interposition d'un joint circonférentiel (62).

5. Le dispositif de la revendication 3, dans lequel le transducteur est un exciteur (54) de haut-parleur à mode distribué, la première branche étant plane et portant un panneau vibratile (16) entrainé par l'exciteur.

6. Le dispositif de la revendication 1, dans lequel le capteur est placé dans une région proximale de la face externe de la seconde branche, au voisinage de la région centrale de plus forte courbure du U.

7. Le dispositif de la revendication 1, dans lequel le capteur comprend une capsule microphonique (48) elle-même logée dans un support intermédiaire (50) rapporté sur une paroi de la seconde branche.

8. Le dispositif de la revendication 1, dans lequel l'une au moins des branches porte sur sa face interne un patin de retenue antidérapant (46) réalisé en un matériau résilient acoustiquement absorbant.

9. Le dispositif de la revendication 1, dans lequel la longueur de la seconde branche est plus faible que celle de la première branche.

10. Le dispositif de la revendication 1, dans lequel les boutons de commande, la carte imprimée et les témoins de fonctionnement sont portés par la première branche, tandis que l'antenne de communication en champ proche est portée par la seconde branche.

## Patentansprüche

1. Freisprechtelefonvorrichtung zur Herstellung einer Schnittstelle mit einem Mobiltelefon,
wobei diese Vorrichtung (10) die Form eines Monoblock-Zubehörteils aufweist, das geeignet ist, auf abnehmbare Weise durch Festklemmen an einem flachen Ausrüstungsteil eines Kraftfahrzeugs, insbesondere einer Sonnenblende, befestigt zu werden,
wobei diese Vorrichtung ein Gehäuse (12) aufweist, welches aufnimmt: einen Mikrofon-Schallsensor (14); einen Tonwiedergabewandler (54, 16); mehrere Steuertasten (18, 20, 22, 24); eine Leiterplatte (64), die elektronische Schaltungen trägt; und eine Versorgungsbatterie; sowie eventuell: Funktionskontrollleuchten (26, 28), einen externen Verbinder und eine Nahfeldkommunikationsantenne (66),
wobei das Gehäuse die Form eines lang gestreckten Bandes hat, das auf sich selbst zurückgebogen ist, derart, dass eine Klemme gebildet wird, die seitlich ein U-förmiges Profil aufweist, mit einem ersten Schenkel (32) und einem zweiten Schenkel (34), die sich auf der einen bzw. anderen Seite eines mittleren Bereiches mit stärkerer Krümmung des "U" (30) erstrecken,
wobei die Vorrichtung **dadurch gekennzeichnet ist, dass**:
- das gekrümmte Band in dem mittleren Bereich eine quer verlaufende Diskontinuität (36) aufweist, welche die zwei Schenkel mechanisch trennt; und
- der Wandler von dem ersten Schenkel getragen wird und der Sensor von dem zweiten Schenkel getragen wird, so dass der Wandler und der Sensor durch die quer verlaufende Diskontinuität akustisch voneinander entkoppelt sind.

2. Vorrichtung nach Anspruch 1, wobei die zwei Schenkel starre Schenkel sind, die in dem mittleren Bereich durch ein Gelenk (38) mit quer verlaufender Achse miteinander verbunden und aneinander angelenkt sind, wobei dieses Gelenk mit Mitteln (44) zur elastischen Rückholung der zwei Schenkel in der Richtung ihrer Annäherung aneinander verbunden ist.

3. Vorrichtung nach Anspruch 1, wobei der erste Schenkel eine Aufnahme (58) aufweist, die ein geschlossenes Volumen definiert, das den Wandler aufnimmt.

4. Vorrichtung nach Anspruch 3, wobei das geschlossene Volumen durch einen Deckel verschlossen ist, mit Anbringung einer Umfangsdichtung (62) dazwischen.

5. Vorrichtung nach Anspruch 3, wobei der Wandler ein Exciter (54) eines Lautsprechers mit verteiltem Modus ist, wobei der erste Schenkel eben ist und eine schwingende Platte (16) trägt, die durch den Exciter zu Schwingungen angeregt wird.

6. Vorrichtung nach Anspruch 1, wobei der Sensor in einem proximalen Bereich der Außenseite des zweiten Schenkels angeordnet ist, in der Nähe des mittleren Bereiches mit stärkerer Krümmung des "U".

7. Vorrichtung nach Anspruch 1, wobei der Sensor eine Mikrofonkapsel (48) aufweist, die ihrerseits in einer Zwischenhalterung (50) aufgenommen ist, die an einer Wand des zweiten Schenkels angebracht ist.

8. Vorrichtung nach Anspruch 1, wobei mindestens einer der Schenkel auf seiner Innenseite einen rutschfesten Halteschuh (46) trägt, der aus einem schallschluckenden elastischen Material hergestellt ist.

9. Vorrichtung nach Anspruch 1, wobei die Länge des zweiten Schenkels kleiner als diejenige des ersten Schenkels ist.

10. Vorrichtung nach Anspruch 1, wobei die Steuertasten, die Leiterplatte und die Funktionskontrollleuchten von dem ersten Schenkel getragen werden, während die Nahfeldkommunikationsantenne von dem zweiten Schenkel getragen wird.

## Claims

1. A phone device for "hands-free" interfacing with a portable phone,
said device (10) being in the form of a single-piece accessory adapted to be removably fastened by being clamped onto a flat equipment of a motor vehicle, in particular a sun visor,
said device including a casing (12) housing : a sound pick-up microphone sensor (14) ; a sound reproduction transducer (54, 16) ; a plurality of control buttons (18, 20, 22, 24) ; a printed board (64) carrying electronic circuits ; and a power battery ; as well as, possibly :
operation indicators (26, 28), an external connector and a near-field communication antenna (66),
wherein the casing has the shape of an elongated band, bended on itself so as to form a clamp having laterally a U-shaped profile, with a first branch (32) and a second branch (34) extending respectively on either side of a central region with a greater curvature of the U (30),
said device being **characterized in that** :
- the bended band has in the central region a transverse discontinuity (36) mechanically separating the two branches ; and
- the transducer is carried by the first branch and the sensor is carried by the second branch, so that the transducer and the sensor are acoustically decoupled from each other by said transverse discontinuity.

2. The device of claim 1, wherein the two branches are rigid branches connected and articulated to each other in the central region by a hinge (38) of transverse axis, said hinge being associated with means (44) for elastic return of the two branches in the direction of their moving closer together.

3. The device of claim 1, wherein the first branch comprises an accommodation (58) defining a closed volume receiving the transducer.

4. The device of claim 3, wherein the closed volume is closed by a lid with interposition of a circumferential seal (62).

5. The device of claim 3, wherein the transducer is a distributed-mode loudspeaker exciter (54), the first branch being planar and carrying a vibrant panel (16) driven by the exciter.

6. The device of claim 1, wherein the sensor is placed in a region proximal to the outer face of the second branch, near the central region of greater curvature of the U.

7. The device of claim 1, wherein the sensor comprises a microphone capsule (48), itself accommodated in an intermediate support (50) added on a wall of the second branch.

8. The device of claim 1, wherein one at least of the branches carries on its inner face a non-slip holding pad (46) made of an acoustically absorbent resilient material.

9. The device of claim 1, wherein the length of the second branch is lower than that of the first branch.

10. The device of claim 1, wherein the control buttons, the printed board and the operation indicators are carried by the first branch, whereas the near-field communication antenna is carried by the second branch.
